# EUROPEAN PATENT APPLICATION

(11) **EP 2 402 894 A1**
(43) Date of publication of application: **04.01.2012**
(21) Application number: 10174965.3
(22) Date of filing: 01.09.2010
(51) Int. Cl.: G06Q 10/00

(54) **Systems and methods for mobile crowd sourcing**

(30) Priority: 30.06.2010 IN CH18502010
(71) Applicant: Alcatel Lucent, 75007 Paris (FR)
(72) Inventor: Govindaraj, Dinesh, 560045 Bangalore (IN); K V M, Naidu, 560045 Bangalore (IN); Nandi, Animesh, 560045 Bangalore (IN); Narlikar, Girija, 560052 Bangalore (IN)
(74) Representative: Sciaux, Edmond

(57) **Abstract**

Mobile crowd sourcing systems and method are disclosed. The present invention relates to crowd sourcing and, more particularly, to mobile crowd sourcing systems in communication networks. Existing crowd sourcing systems do not provide options to route tasks to task doers based on the interests of task doers, network load, free timings, ratings and the like. The disclosed crowd sourcing system selects task doers for a particular task based on interests of the task doers, their rating, compensation expected, network load, free timings and the like. The crowd sourcing system learns the preferences and details of the task doers over a period of time by monitoring the data maintained by the task management module. This ensures that task doers receive task only based on their preferences and thus avoids annoying the task doers with unnecessary tasks. The system minimizes network and compensation costs and maximizes the task quality.

## Description

### TECHNICAL FIELD

The present invention relates to crowd sourcing and, more particularly, to mobile crowd sourcing systems in communication networks.

### BACKGROUND

Existing systems employ crowd sourcing mechanisms, where tasks are outsourced from task givers to task doers to complete the task. The crowd sourcing platforms process the task submitted by the task givers to the task handling platform. Further, the task handling platform distributes all the tasks available to the task doers. Crowd sourcing platforms such as Amazon's mechanical Turk (mTurk), txteagle and the like distribute all the tasks available with the platform to the task doers, and then it is up to the doers to choose the tasks of their interest. Drawbacks associated with such crowd sourcing platforms are that there is no means to categorize the tasks as per the interests of the user, and deliver those tasks to the users according to their interests. In an example, if a particular task doer is interested only in tasks related to automobiles, the user may not be interested in writing a review on the latest mobile phone released in the market as the doer may not have not enough knowledge about mobile phones or he may not be interested in doing the task owing to his interests. Therefore, the task doers will have to spend additional time in browsing through all the tasks and selecting the tasks of their interest. The annoyance involved in selecting the tasks from large list of available tasks may discourage potential task doers from taking up any tasks.

Further, in case of crowd sourcing platforms employing mobile communication networks, routing all the tasks to the task doers consumes a lot of network bandwidth, and, therefore, it is not desirable to route all tasks to all doers. The costs involved in such mobile crowd sourcing platforms will be high if the tasks available with the platform are not routed intelligently to the task doers.

Some mobile crowd sourcing platforms like txteagle select the task doers based on their accuracy levels. The accuracy level is judged based on the correctness of the doer in doing the task. The platform studies only limited number of tasks like transcriptions, translations and surveys. The task doers are selected only on the basis of their accuracy levels and not based on the profiles (like demography and so on) of the task doers. Hence, these platforms lack user selection criterion based on user profiles. In addition, theses platforms do not allow the doers to select tasks based on the monetary compensation values.

### SUMMARY

In view of the foregoing, an embodiment herein provides a task management module for handling tasks in a crowd sourcing environment. The module adapted for receiving a task from a plurality of task givers, identifying a plurality of task doers suitable for the task, selecting the task doers for performing the task, routing the tasks to the selected task doers, and sending the responses received from the task doers to the task givers for rating the task doers. The task management module is further adapted for storing updates on the ratings provided by the task givers on the module. The task management module is adapted for identifying plurality of the task doers based on a plurality of factors comprising of availability of task doers, task doers interests, profile information, ratings, compensation cost, network load. The task management module is adapted for selecting plurality of the task doers based on optimization techniques, the optimization techniques based on a plurality of factors comprising of network load, task doer availability, cost compensation. The task management module is adapted for routing the task to the task doer when the task doer is indicated available by the network operator. The task management module is adapted for routing the task to the task doer through a communication network via at least one of Short Message Service (SMS), SIM card application, Unstructured Supplementary Service Data (USSD) and General Packet Radio Service (GPRS).

Embodiments further disclose a system for handling tasks in a crowd sourcing environment. The system comprising plurality of task givers, a task management module, communication network with a database, plurality of task doers. The task management module adapted for receiving a task from the plurality of task givers, identifying a plurality of task doers suitable for the task, selecting the task doers for performing the task, routing the tasks to the selected task doers and sending responses received from the task doers to the task givers for rating the task doers, a database in a communication network, the database adapted for storing information on plurality of factors, the factors comprising network load, task doer presence, demographic information and providing the stored information to the task management module on receiving a request for the information from the task management module.

The system is further adapted for storing updates on the ratings provided by the task givers on the module. The system is adapted for identifying plurality of the task doers based on a plurality of factors comprising of availability of task doers, interests of task doers, profile information, ratings, compensation cost, network load. The system is adapted for selecting plurality of the task doers based on optimization techniques, the optimization techniques based on a plurality of factors comprising of network load, task doer availability, and cost compensation.

Also, disclosed herein is a method for crowd sourcing in a communication network. The method comprising steps of a task management module receiving plurality of tasks from task givers, the task management module identifying a plurality of the task doers suitable for the tasks, the task management module selecting the task doers for doing the task, the task management module routing the tasks to the selected task doers, the task management module analyzing responses of the task received from the task doers and the task management module sending the responses to the task givers for rating the task doers. The method wherein the method further stores updates on the ratings provided by the task givers on the module. The method identifies plurality of the task doers based on a plurality of factor comprising of interests of task doers, availability of task doers, ratings, compensation cost, network load. The method selects plurality of the task doers based on optimization techniques, the optimizing techniques based on a plurality of factors comprising of network load, task doer availability, cost compensation. The method routes the task to the task doer when the task doer is indicated available by the network operator. The task doers are given ratings by the task givers based on at least one of the factors such as participation rates, quality of the task response, time taken for completing the task.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates an overview of the crowd sourcing system, according to an embodiment as disclosed herein;

FIG. 2 illustrates the sub-modules of the task management module, according to an embodiment as disclosed herein;

FIG. 3 is a flow chart depicting the method of crowd sourcing, according to an embodiment as disclosed herein; and

FIG. 4 is a flow chart depicting an implementation of crowd sourcing, according to an embodiment as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

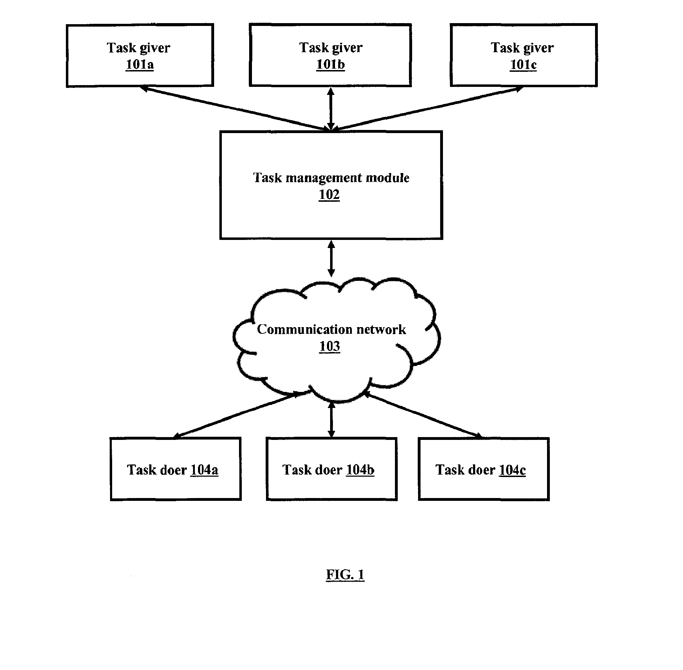

The embodiments herein disclose a mechanism for crowd sourcing in communication networks by providing systems and methods therefore. Referring now to the drawings, and more particularly to FIGS. 1 through 4, where similar reference characters denote corresponding features consistently throughout the figures, there are shown embodiments.

A system and method for crowd sourcing is disclosed. The method employs intelligent mechanisms for categorizing the tasks based on the interests of the task doers. The method assigns tasks to task doers based on the interests of the task doers. In addition, the method also minimizes the usage of the network bandwidth, as only those tasks which may be of interest to the doers are sent to the task doers over the communication network. When any task is uploaded by the task givers, the task may be moved to a task management module. The task management module may be provided with intelligence in order to analyze the suitability of the task to people who are interested in performing the tasks. The task management module may learn the interests of a task doer, his ability in performing the assigned task, his accuracy levels, time period when a doer is free to take up a task and the like over a period of time by studying the participation details of the task doer and the type of tasks he participates in. Based on the analysis performed, the task management module sends the tasks appropriate for a particular task doer. The task doer then selects the tasks which may be of interest to him. Further, on performing the task, the task doer sends the results back to the task management module. The task management module then analyzes the results and may also categorize the task doers based on the accuracy of performing the tasks. The results may be sent to the task givers and if preferred the task givers may offer compensations or some incentives to the task doers.

FIG. 1 illustrates an overview of the crowd sourcing system, according to an embodiment as disclosed herein. The crowd sourcing system may be employed for a mobile network or any other communication network. The crowd sourcing system may comprise a plurality of task givers 101a, 101b and 101c, a task management module 102, a communication network 103 and a plurality of task doers 104a, 104b and 104c.

The task givers 101a, 101b and 101c may be a person or a company who are interested in getting work done by assigning tasks to task doers 104a, 104b and 104c. The task givers 101a, 101b and 101c may assign task such as user surveys, interactive advertisement campaigns, responding to a query on local services or solving some problems and the like to the task doers 104a, 104b and 104c.

The task management module 102 is the core of the crowd sourcing system and is responsible for processing the tasks of the crowd sourcing systems. In an embodiment, the task management module may either reside external to a communication network 103 or within a communication network 103. The task management module 102 comprises of different sub-modules to ensure that the right task is routed to the right task doers 104a, 104b and 104c based on the interest of the task doers 104a, 104b and 104c. The task givers 101a, 101b and 101c upload their tasks to the task management module 102. The task management module 102 then analyzes the task based on its type, time required to complete the task, the compensation offered by the task givers 101a, 101b and 101c. Based on the analysis performed, the task management module 102 may categorize the task. The task management module 102 may then obtain details of the task doers 104a, 104b like interests, free time, and compensation expected and so on. Further, a mapping may be performed with respect to the interests of the users to the type of the tasks and tasks that match the interests of the task doers 104a, 104b and 104c may be sent to appropriate task doers 104a, 104b and 104c.

The communication network 103 may be a network that facilitates interaction between the task givers 101a, 101b and 101c and the task doers 104a, 104b and 104c through the task management module 102. The communication network 103 may be a mobile communication network. The communication network 103 may be a Session Initiation Protocol (SIP) network, Next Generation Network (NGN), IP Multimedia Subsystem (IMS) network and the like. In an embodiment, the communication network may also house the task management module 102 or some other modules to enable the task completion process.

The task doers 104a, 104b and 104c may be individuals or group of people who are interested in taking up the task assigned by the task givers 101a, 101b and 101c. The task doers 104a, 104b and 104c may be people who may be willing to spend time to perform some tasks given by the task givers 101a, 101b and 101c at the cost of some compensation offered by the task givers 101a, 101b and 101c.

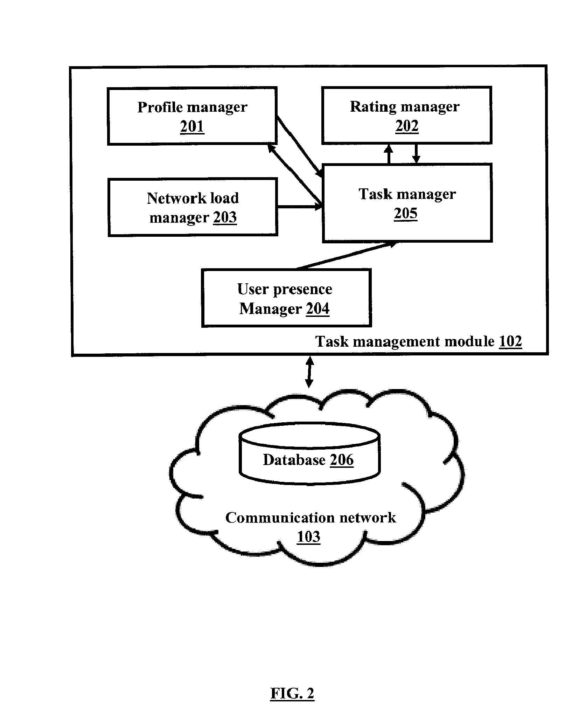

FIG. 2 illustrates the sub-modules of the task management module, according to an embodiment as disclosed herein. The task management module 102 may comprise of sub-modules to assist in the functioning of the task management activity. The sub-modules may include a profile manager 201, a rating manager 202, a network load manager 203, a user presence manager 204 and a task manager 205 among the others. In addition, the communication network 103 may also comprise of a database 206 to store the details of the task doer's account subscription and provide the same on request from the task management module 102.

When a task giver 101a, 101b or 101c submits a task to be performed, the task may be sent to the task management module 102. The task management module 102 receives the task and sends the task to the task manager 205.

The profile manager 201 is responsible for maintaining profile details of the task doers 104a, 104b and 104c. The profile manager 201 maintains details such as preferences of the task doers, demographic details, interests and so on. In an embodiment, the profile manager 201 learns of the interests, preferences and the like of the task doers by analyzing the participation details of the task doers over a period of time. Further, the profile manager 201 may also interact with the task manager 205 in obtaining the details required regarding the participation of the task doers and the like. The profile manager 201 may also track the expected compensation for different task doers and store the same. Further, all the information stored in the profile manager 201 may be provided to the task manager 205 as and when required by the task manager 205.

The rating manager 202 is responsible for storing the details on the ratings of the task doers 104a, 104b and 104c for every task that they perform. The rating manager 202 may obtain information such as time taken by the task doer 104a, 104b and 104c to complete the task, rating provided by the task givers idea, 101b and 101c, task doers quality of response to the task, task doers participation details, expected compensation to learn the rating of the task doers 104a, 104b and 104c. Once the rating manager 202 learns the ratings it may provide the information to the task manager 205 for selecting the task doers for a particular task.

The network load manager 203 stores information on the load of the communication network 103. The communication network operator may provide details of the load on the communication network 103 at different parts of the network. The information from the network load manager 203 may then be sent to the task manager 205, which may be helpful in selecting the task doers 104a, 104b and 104c in parts where the network load is minimum so as ensure there is no overload on the communication network 103.

The user presence manager 204 stores information on the availability of the task doers 104a, 104b and 104c. The network operator may provide information on the presence of the task doers 104a, 104b and 104c at different intervals to the user presence manager 204. Further, the user presence manager 204 may send the information on the availability of the task doer 104a, 104b and 104c to the task manager 205.

The task manager 205 processes the tasks submitted by the task givers 101 a, 101b and 101c to the appropriate task doers 104a, 104b and 104c. The task manager 205 also selects task doers 104a, 104b and 104c so as to optimize the network cost and the task quality. Once task doers 104a, 104b and 104c are selected, the task manager 205 dispatches tasks through operator's network to the task doers 104a, 104b and 104c. The tasks may be sent to the task doers 104a, 104b and 104c by different mediums such as Short Message Service (SMS), Subscriber Identity Module (SIM) card application, Unstructured Supplementary Service Data (USSD) or General Packet Radio Service (GPRS) and so on.

The communication network 102 may also comprise of a database 206 in addition to various other components. The database 206 may provide information on network load, user demographics and user presence as maintained by the network operator. In an embodiment, the database 206 may also provide information on personal details of the task doers 104a, 104b and 104c such as age, location, salary and profession. The information stored in the database 206 may be sent to the task manager 205 in order to help the task manager 205 in deciding the task doers 104a, 104b and 104c suitable for a task.

In an embodiment, the compensation expected by the task doers 104a, 104b or 104c may be determined by monitoring the task doer participation details i.e., the kind of tasks the task doer has participated previously and the compensation offered by the tasks. In an embodiment, compensation may be a monetary compensation, material goods, vouchers, coupons and the like. As most of the tasks are associated with some compensation, if the task doer 104a, 104b or 104c preferences match a particular task and the task doer 104a, 104b or 104c still does not complete the task it is likely that it is because the offered compensation is insufficient. In addition, the task doers 104a, 104b or 104c may also be classified based on the spending patterns to determine what kind of compensation they would prefer.

In an embodiment, the task doer's free timings may be determined with the information provided by the network operator. The task doer's idle screen may be determined by the SIM application, which is controlled by the network operator. Further, the task doer's free times may be mined via the operator's network based on the records of when the task doer makes calls, sends SMS, or uses any Value Added Services (VAS).

In an embodiment, a computer program may be implemented in the task management module 102 to perform the task management function. In such a case, the computer program is stored on the memory module that is provided on a computer. The program may comprise of instructions for performing the task management. The program may be capable of storing the tasks submitted by the task givers 101, identifying the task givers 103 who are suitable for performing every individual task and sending the tasks to the task givers 103. Further, the program may be capable of taking into consideration the interests of the task doers, various optimization techniques and the like for the allocation of the tasks to the task doers 103. In addition, when the task is completed the program may be capable of analyzing the completed tasks and sending the tasks back to the task givers 101. The program may also update the details of the task doers 103 such as their profiles, ratings, interests and so on.

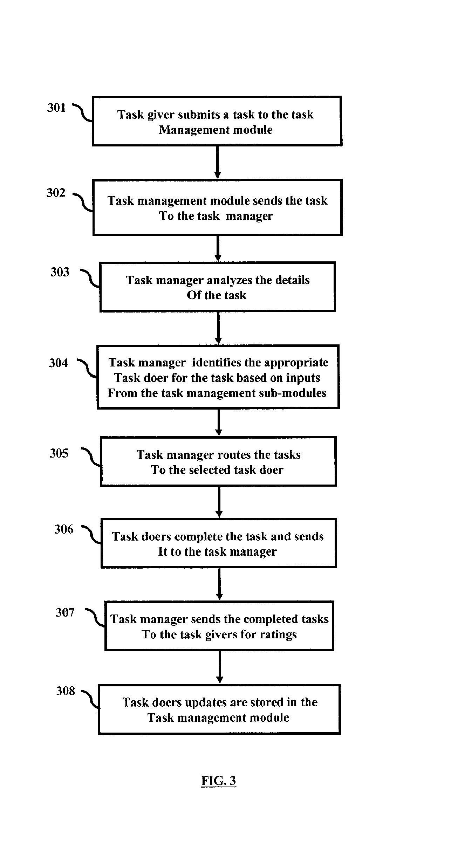

FIG. 3 is a flow chart depicting the method of crowd sourcing, according to an embodiment as disclosed herein. A task giver 101a, 101b or 101c who would like to get some task done by means of crowd sourcing platform may submit (301) the task to the task management module 102. In an embodiment, the task may be writing a note on a survey to be conducted, writing a review on the latest technological developments in the mobile market, solving a problem, creating a database or the like. The task management module 102 on receiving the task directs (302) the task towards a task manager 205. The task manager 205 may perform (303) an analysis of the task in order to determine the type of the task and further categorize the same. The tasks may be categorized based on the compensation offered, incentives, time consumption or the like. Further, the task manager 205 may identify (304) the appropriate task doers 104a, 104b or 104c for the task based on the inputs obtained from the sub-modules of the task management module 102. In an embodiment, it is also possible that the task management module (102) may select only one task doer (104) for a particular task or multiple task doers (104). The task manager 205 may take into consideration details such as the preference of task doers and demographics, the network load, task doer rating, task doer's expected compensation and task doers free timings from the sub-modules of the task management module 102. The obtained details may be combined with the existing profile details of the task doer present with the network operator. Based on the above consideration the task doer's who are most suitable for the task are selected. On selecting the task doers, the task manager 205 may route (305) the task to the task doers 104a, 104b (say task doers selected are 104a, 104b). On receiving the task, the task doers 104a, 104b start performing the task. On completion of the task, the task doers 104a, 104b may submit (306) the completed task back to the task management module 102. In an embodiment, the task may be submitted by SMS, USSD, GPRS or the like. The task management module 102 may then send the task to the task manager 205. Further, the task manager 205 may send (307) the task to the task givers 101a, 101b or 101c in order to rate the completed task and check the accuracy levels of the task doers 104a, 104b. The task givers 101a, 101b and 101c may then rate the task doers 104a, 104b based on their accuracy levels in performing the assigned task, time of completion and so on. Further, the updated ratings of the task doers 104a and 104b may be stored on the rating manager 202 of the task management module 102. The various actions in method 300 may be performed in the order presented, in a different order or simultaneously. Further, in some embodiments, some actions listed in FIG. 3 may be omitted.

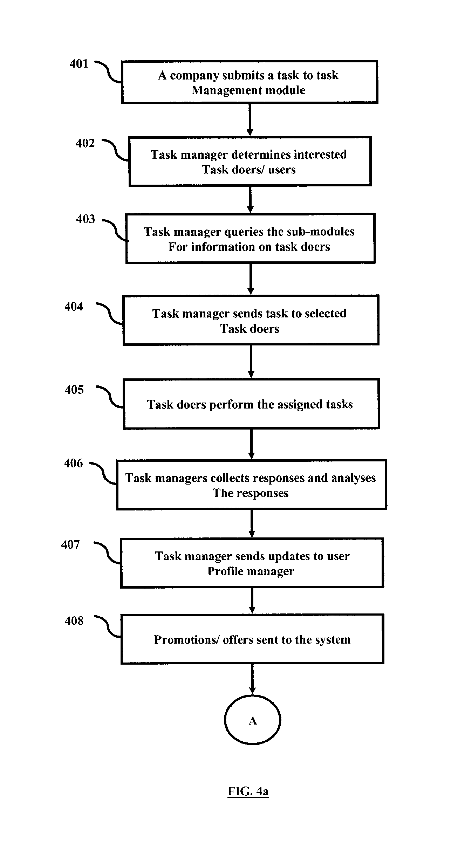

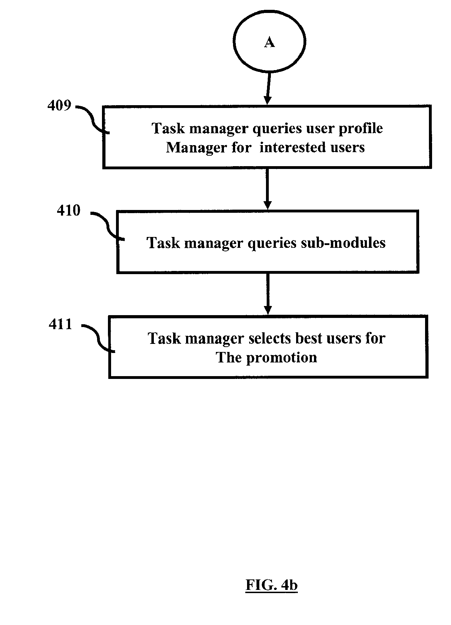

FIG. 4 is a flow chart depicting an implementation of crowd sourcing, according to an embodiment as disclosed herein. In the embodiment herein, say a company is interested in conducting a market survey on mobile handsets. The embodiment herein refers to task doers 104a, 104b and 104c as users. The company may submit (401) the requirements of the task to the task management module 102. The company may also specify the budget of the survey as this may be helpful in determining the monetary compensations that may be offered to the users. The task management module 102 routes the task to the task manager 205. The task manager 205 may determine (402) task doers/users who are interested in mobile phones, smart phones and mobile applications. The task manager 205 may determine the details of interest from the data on the user profile manager 201. The profile manager 201 may have collected the data based on the handsets used and mobile value added service purchases made by the mobile subscriber. This information may be supplied by the network operator. On determining the interested users, the details of the interested users say 104b, 104c may be sent to the task manager 205. Further, the task manager may query (403) the sub-modules of the task management module 102 such as rating manager 202 to know the ratings of the users. The network load manager 203 may be queried to determine the load, location and presence on the network with respect to the selected set of users. The task manager 205 may then use the data from all the sub-modules to perform optimization of the user by selecting only those users who minimize network cost, compensation cost and maximize the survey quality. The task manager 205 sends (404) the survey task to the selected users. The users on receiving the task, performs (405) the task i.e., survey in this case. The users then send the completed tasks to the task manager 205. The task manager 205 gathers the task received from all the users and analyzes (406) the responses to the tasks. The task manager 205 then sends (407) the updates on the analysis to the profile manager 201. The updated information that may be on preferences of the user or the like may be stored on the profile manager 201 for future references. Later, say the task management module 102 receives (408) a request from a local store to send discounts or promotions or offers to the likely buyers of a new smart phone. The task manager 205 may query (409) user profile manager 201 for the users who may be interested in the offer so that relevant recipients of the promotion may be selected. In an embodiment, if a user wants reviews of specific handsets from other users, the user profile manager 201 may specify the likely set of users who have owned or expressed interest in that specific handset and then send a query to all such users for review. The task manager 205 then queries (410) the sub-modules of the task management module 102 such as rating manager 202, network load, location, presence managers and so on for details of interested users. On obtaining the details, the task manager 205 solves the optimization problem and selects (411) the best user set for new promotions or offers. Thus, the method picks relevant users in each case, further users are not unnecessarily annoyed with irrelevant, uninteresting tasks and network costs are maintained. The various actions in method 400 may be performed in the order presented, in a different order or simultaneously. Further, in some embodiments, some actions listed in FIG. 4 may be omitted.

In an embodiment, the disclosed crowd sourcing platform will intelligently select task doers only when the system predicts the task doer is idle or free. The system sends the tasks to those task doers who have high reputation or rating in the system database and so the quality of the tasks is improved. As a result, there will be increase in the revenues and profits of the mobile crowd sourcing platform as this solution maximizes high quality response rates and reduces the cost.

The embodiments disclosed herein can be implemented through at least one software program running on at least one hardware device and performing network management functions to control the network elements. The network elements shown in Fig. 1 and 2 include blocks which can be at least one of a hardware device, or a combination of hardware device and software module.

The embodiment disclosed herein specifies a system for crowd sourcing. The mechanism allows crowd sourcing to mobile communication devices by providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A task management module (102) for handling tasks in a crowd sourcing environment, said module adapted for:
receiving a task from a plurality of task givers (101);
identifying a plurality of task doers (104) suitable for said task;
selecting said task doers (104) for performing said task;
routing said tasks to said selected task doers (104); and
sending responses received from said task doers (104) to said task givers (101) for rating said task doers (104).

2. The task management module (102) as in claim 1, wherein said module is further adapted for storing updates on said ratings provided by said task givers (101) on said module.

3. The task management module (102) as in claim 1, wherein said module is adapted for identifying plurality of said task doers (104) based on a plurality of factors comprising of availability of task doers (104), interests of task doers (104), profile information, ratings, compensation cost, network load.

4. The task management module (102) as in claim 1, wherein said module is adapted for selecting plurality of said task doers (104) based on optimization techniques, said optimization techniques based on a plurality of factors comprising of network load, task doer availability, cost compensation.

5. The task management module (102) as in claim 1, wherein said module is adapted for routing said task to said task doer (104) when said task doer (104) is indicated as being available by said network operator.

6. The task management module (102) as in claim 1, wherein said module is adapted for routing said task to said task doer (104) through a communication network (103) via at least one of
Short Message Service (SMS);
SIM card application;
Unstructured Supplementary Service Data (USSD); and General Packet Radio Service (GPRS).

7. A system for handling tasks in a crowd sourcing environment, said system comprising plurality of task givers (101), a task management module (102), communication network (103) with a database (206), plurality of task doers (104), wherein said task management module is adapted for
receiving a task from said plurality from task givers (101);
identifying a plurality of task doers (104) suitable for said task;
selecting said task doers (104) for performing said task;
routing said tasks to said selected task doers (104); and
sending responses received from said task doers (104) to said task givers (101) for rating said task doers (104); and
said database (206) is adapted for
storing information on plurality of factors, said factors comprising network load, task doer presence, demographic information; and
providing said stored information to said task management module (102) on receiving a request for said information from said task management module (102).

8. The system as in claim 7, wherein said system is adapted for identifying plurality of said task doers (104) based on a plurality of factors comprising of availability of task doers (104), interests of task doers (104), profile information, ratings, compensation cost, network load.

9. The system as in claim 7, wherein said system is adapted for selecting plurality of said task doers (104) based on optimization techniques, said optimization techniques based on a plurality of factors comprising of network load, task doer availability, cost compensation.

10. A method for crowd sourcing in a communication network (103) said method comprising steps of
a task management module (102) receiving plurality of tasks from task givers (101);
said task management module (102) identifying a plurality of said task doers (104) suitable for said tasks;
said task management module (102) selecting said task doers (104) for doing said task;
said task management module (102) routing said tasks to said selected task doers (104); and
said task management module (102) sending responses received from said task doers (104) to said task givers (101) for rating said task doers (104).

11. The method as in claim 10, wherein said method further stores updates on said ratings provided by said task givers (101) on said module.

12. The method as in claim 10, wherein said method identifies plurality of said task doers (104) based on a plurality of factor comprising of interests of task doers (104), availability of task doers (104), profile information, ratings, compensation cost, network load.

13. The method as in claim 10, wherein said method selects plurality of said task doers (104) based on optimization techniques, said optimizing techniques based on a plurality of factors comprising of network load, task doer availability, cost compensation.

14. The method as in claim 10, wherein said task doers (104) are given ratings by said task givers (101) based on at least one of the factors such as participation rates, quality of said task response, time taken for completing said task.

15. A computer program product provided with a memory module, said memory module comprising of instructions for performing steps of
a task management module (102) receiving plurality of tasks from task givers (101);
said task management module (102) identifying a plurality of said task doers (104) suitable for said tasks;
said task management module (102) selecting said task doers (104) for doing said task;
said task management module (102) routing said tasks to said selected task doers (104); and
said task management module (102) sending responses received from said task doers (104) to said task givers (101) for rating said task doers (104).
